(19) **Europäisches Patentamt / European Patent Office / Office européen des brevets**

(11) **EP 1 300 216 B1**

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(51) Int Cl.:
*B23Q 7/02* (2006.01)  *B23Q 5/10* (2006.01)
*B23Q 16/10* (2006.01)  *B23Q 16/02* (2006.01)
*B23Q 5/28* (2006.01)  *B23Q 1/52* (2006.01)

(21) Anmeldenummer: **02022021.6**

(22) Anmeldetag: **01.10.2002**

(54) **Rundschalttisch mit Direktantrieb und Direketantrieb dafür**

Rotary indexing table with direct drive and direct drive therefor

Table à transfert circulaire avec entraînement direct et entraînement direct pour celle-ci

(84) Benannte Vertragsstaaten:
**AT BE BG CH CY CZ DE DK EE ES FI FR GB GR IE IT LI LU MC NL PT SE SK TR**

(30) Priorität: **04.10.2001 DE 10149180**

(43) Veröffentlichungstag der Anmeldung:
**09.04.2003 Patentblatt 2003/15**

(73) Patentinhaber: **Peiseler GmbH & Co.KG**
**42855 Remscheid (DE)**

(72) Erfinder:
• **Korischem, Benedict, Dr.**
**40489 Düsseldorf (DE)**
• **Hölter, Hans-Joachim**
**42399 Wuppertal (DE)**
• **Koep, Dirk-Wolfgang**
**45701 Herten (DE)**

(74) Vertreter: **Gesthuysen, von Rohr & Eggert**
**Patentanwälte**
**Postfach 10 13 54**
**45013 Essen (DE)**

(56) Entgegenhaltungen:
**EP-A- 1 155 780**  **EP-A- 1 228 839**
**US-A- 5 584 621**  **US-B1- 6 292 998**

**Beschreibung**

Die Erfindung betrifft einen Rundschalttisch mit einem ortsfesten Gehäuse, mit einer in dem Gehäuse drehbar gelagerten Spindel und mit einem in dem Gehäuse angeordneten Antriebsmotor, wobei der Antriebsmotor einen Rotor mit mindestens einem Magneten und einen Stator mit mindestens einer Wicklung aufweist. Ein solcher Rundschalttisch ist aus DE 198 42 306 A bekannt.

Rundschalttische dienen dazu, einmal aufgespannte Werkstücke in jeder Winkelstellung der Drehachse zu positionieren, um die Werkstücke dann in der so eingestellten Position bearbeiten zu können. Die Bearbeitung der Werkstücke erfolgt dann von Hand oder mittels entsprechender Bearbeitungsmaschinen, beispielsweise Fräs-, Bohr- oder Schleifmaschinen. Das Werkstück kann dabei je nach Ausführungsart des Rundschalttischs horizontal oder vertikal angeordnet werden. Derartige Rundschalttische werden häufig auch als Teiltische oder Teilgeräte bezeichnet.

Rundschalttische mit integriertem Motor, die häufig auch als NC Rundschalttische oder NC Teilgeräte (NC = numerical controlled) bezeichnet werden sind in einer Vielzahl von Ausführungsformen bekannt. Grundsätzlich kann man die bekannten Rundschalttische mit integriertem Motor jedoch in zwei Gruppen unterteilen; einerseits als Rundschalttische mit einem Direktantrieb, andererseits als Rundschalttische mit einem Getriebe.

Bei einem Rundschalttisch mit Direktantrieb wird die Spindel oder ein das Werkstück aufnehmender Schaltteller direkt vom Motor angetrieben. Die Elemente des Motors, d. h. der Rotor und der Stator sind koaxial um die Spindel herum angeordnet. Dabei wird das die Magnete tragende Rotorgehäuse meistens durch Schraubverbindungen auf der Spindel und das die Wicklungen aufweisende Statorgehäuse im feststehenden Gehäuse ebenfalls durch Schraubverbindungen befestigt. Neben den Wicklung befinden sich in dem Statorgehäuse häufig auch Kanäle für eine Wasserkühlung des Motors. Die koaxiale Anordnung des Motors um die Spindel hat den Vorteil, daß ein derartiger Rundschalttisch eine relativ geringe Baulänge aufweist und daher leicht in feststehende Werkzeugmaschinen integriert werden kann.

Ein weiterer Vorteil eines Rundschalttischs mit einem Antriebsmotor als Direktantrieb besteht darin, daß aufgrund der geringen Anzahl der notwendigen Bauteile ein relativ leiser und wartungsarmer Betrieb des Rundschalttischs möglich ist. Darüber hinaus weist ein solcher Direktantrieb eine hohe Positioniergenauigkeit auf, da die Spindel direkt angetrieben wird und somit kein Spiel zwischen zueinander bewegten Teilen, wie beispielsweise bei einem Schneckentrieb, auftreten kann. Auch kann ein Rundschalttisch mit Direktantrieb mit maximaler Motordrehzahl betrieben werden, was für einige Anwendungen, beispielsweise das Rundschleifen, vorteilhaft ist.

Nachteilig bei einem Direktantrieb des Rundschalttisches ist jedoch, daß nur ein relativ geringes Drehmoment zur Verfügung steht. Hierbei muß berücksichtigt werden, daß das maximal zur Verfügung stehende Drehmoment wesentlich vom Durchmesser des Antriebsmotors abhängt und die Größe des Antriebsmotors aufgrund des begrenzten Bauraums nicht beliebig erhöht werden kann. Weist der Rundschalttisch nur ein geringes Drehmoment auf, so sind nur geringe Beschleunigungen des aufgespannten Werkstücks möglich, wodurch entsprechend längere Umschaltzeiten benötigt werden.

Zur Erhöhung des Drehmoments und damit zur Erhöhung der Beschleunigung ist es bekannt, zwischen Antriebsmotor und Spindel bzw. zwischen Antriebsmotor und Planscheibe oder Schaltteller ein Getriebe zu schalten. Dabei werden aufgrund der speziellen Bauform der Rundschalttische bevorzugt konzentrische Getriebe wie beispielsweise Planetengetriebe oder Zykloidengetriebe verwendet. Aus der DE 198 42 306 A1 ist ein Rundschalttisch bekannt, bei dem zwischen dem Rotor des zentral angeordneten Motors und dem Schaltteller ein Planetengetriebe angeordnet ist. Das durch die Verwendung des Planetengetriebes vorhandene Spiel wird bei dem bekannten Rundschalttisch durch eine Hirthverzahnung ausgeglichen, die durch eine hydraulisch betätigbare Sperrvorrichtung zwischen zwei Stellungen verbringbar ist. In der ersten Stellung, in der das auf dem Schaltteller befestigte Werkstück bearbeitet werden soll, ist der Schaltteller mit Hilfe der Sperrvorrichtung gegen das Gehäuse geklemmt. In der zweiten Stellung, in der der Schaltteller gedreht werden soll, werden die Stellkolben der Sperrvorrichtung mit Druck beaufschlagt, wodurch die Hirthverzahnung außer Eingriff gelangt.

Der aus der DE 198 42 306 A1 bekannte Rundschalttisch, der im Vergleich zu anderen ein Getriebe aufweisenden Rundschalttischen bereits ein relativ geringes Bauraumvolumen aufweist, hat jedoch den Nachteil, daß die Verwendung des Planetengetriebes sowie der Sperrvorrichtung mit der Hirthverzahnung den Aufbau des Rundschalttischs aufwendig und damit teuer macht. Darüber hinaus entstehen durch die Verwendung des Planetengetriebes zusätzliche Geräusche beim Betrieb des Rundschalttischs und es sind durch die Hirthverzahnung nur bestimmte Rastpositionen möglich.

Aus der US 5,584,612 A offenbart einen getriebelosen Arbeitsspindelkopf für eine Fräsmaschine, wobei der Arbeitsspindelkopf mit dem aufzunehmenden Fräswerkzeug um zwei zueinander senkrechte Achsen drehbar ausgebildet ist. Hierzu weist der Arbeitsspindelkopf einen Kardanaufbau auf, mit einer um eine erste Achse drehbar angeordneten Gabel und einer um eine zweite Achse drehbar, zwischen den Gabelarmen angeordneten Spindel, wobei sowohl der Gabel als auch der Spindel jeweils ein Motor zum Direktantrieb zugeordnet ist

Der vorliegenden Erfindung liegt daher die Aufgabe zugrunde, einen zuvor beschriebenen Rundschalttisch zur Verfügung zu stellen, der möglichst einfach aufgebaut ist und der bei einem möglichst geringen Bauraumvolumen ein größeres Drehmoment ermöglicht.

Diese Aufgabe ist durch einen Rundschalttisch gemäß Anspruch 1 gelöst.

Durch die Anordnung der Magnete direkt auf der Spindel und die Integration der Wicklungen direkt in das Gehäuse des Rundschalttischs ist der Bauraum des Antriebsmotors in radialer Richtung so optimiert, daß bei gleichem Bauraum des Rundschalttischs ein Antriebsmotor mit einem größeren Durchmesser verwendet werden kann. Da das verfügbare Drehmoment des Antriebsmotors quadratisch mit dem Durchmesser wächst, erreicht man durch die Verwendung eines Antriebsmotors mit einem größeren Durchmesser ein überproportional größeres Drehmoment. Eine anschauliche Formel für das Drehmoment lautet:

$$M(D) = D^2 \cdot \frac{\pi}{2} \cdot k \cdot l$$

M (D) =  Drehmoment
D =  Durchmesser
l =  Magnetlänge
k =  Magnetkonstante

Die Befestigung der Magnete auf der Spindel bzw. der Wicklungen im Gehäuse des Rundschalttischs kann auf verschiedene Art und Weise erfolgen. Bevorzugt werden die Magnete auf der Spindel aufgeschrumpft oder aufgeklebt. Ebenso können die Magnete jedoch auch mit der Spindel verschraubt werden oder es kann eine Kombination der zuvor genannten oder weiterer Befestigungsmöglichkeiten verwendet werden. Die Wicklungen werden bevorzugt mittels einer Vergußmasse, beispielsweise einem Harz, im Gehäuse des Rundschalttischs befestigt. Hierzu sind in dem Gehäuse entsprechende Ausnehmungen vorgesehen. Diese Vergußmasse kann dabei außer zur Befestigung und Positionierung auch zur elektrischen Isolierung der Wicklung gegenüber dem Gehäuse verwendet werden. Daneben ist es jedoch auch möglich, die Wicklungen durch eine formschlüssige Verbindung in dem Gehäuse des Rundschalttischs zu befestigen. Dann sind die Ausnehmungen entsprechend den Abmessungen der Wicklungen angepaßt.

Bei den im Stand der Technik bekannten Rundschalttischen, bei denen die Magnete im Rotorgehäuse und die Wicklungen im Statorgehäuse angeordnet sind, findet die Kühlung der Wicklungen üblicherweise über das Statorgehäuse statt. Bei dem erfindungsgemäßen Rundschalttisch erfolgt die Kühlung der Wicklungen über das Gehäuse des Rundschalttischs, wozu das Gehäuse Kühlelemente, insbesondere Kühlrippen, zur Wärmeabfuhr aufweist. Bei einem stark intermittierenden Betrieb des Rundschalttisches, der in der Praxis häufig vorkommt, ist die Kühlung der Wicklungen über freie oder erzwungene Konvektion am Gehäuse ausreichend, insbesondere wenn die Kühlleistung des Gehäuses durch die Kühlelemente verstärkt wird.

Bei einem nahezu durchgängigen Betrieb des Rundschalttisches, wie er beispielsweise beim Rundschleifen vorkommt, ist die Kühlung der Wicklungen über das Gehäuse in der Regel nicht ausreichend. Die Kühlung erfolgt dann - wie für sich im Stand der Technik bekannt - mit Hilfe eines Kühlmittels, das von außen dem Gehäuse des Rundschalttischs zugeführt wird. Vorteilhafterweise sind dann die Kühlelemente so geformt, daß sie das zugeführtes Kühlmittel um die Wicklungen des Stators herumleiten und zur Wärmeabfuhr aus der Wicklung nutzen. Die Kühlung wirkt dann ähnlich wie bei einer integrierten Wasserkühlung.

Schließlich kann die Wärmeabfuhr auch dadurch gewährleistet werden, daß ein geschlossenes Kühlsystem vorgesehen ist, das extern mit Kühlmittel versorgt wird. Die Kühlelemente sind dann als Kühlkanäle ausgebildet und dienen der Leitung des Kühlmittels.

Eingangs ist ausgeführt worden, daß der erfindungsgemäße Rundschalttisch dazu dient, ein aufgespanntes Werkstück in jeder Winkelstellung der Drehachse zu positionieren, und anschließend mit einer entsprechenden Werkzeugmaschine oder einem entsprechenden Werkzeug zu bearbeiten. Das Werkstück kann dabei entweder direkt auf der Spindel oder auf einer mit der Spindel verbundenen Planscheibe oder einem drehbar gelagerten Schaltteller befestigt werden. Ist eine Planscheibe mit der Spindel verbunden, so wird die Planscheibe vorzugsweise auf der Spindel festgeschraubt und über Lager, beispielsweise Nadellager, am Gehäuse drehbar abgestützt.

Zur Bestimmung der genauen Position der Spindel ist ein Winkelmeßsystem innerhalb des Gehäuses des Rundschalttischs angeordnet, welches direkt oder indirekt mit der Spindel verbunden ist. Durch die erfindungsgemäße Anordnung des Antriebsmotors innerhalb des Gehäuses kann der eingesparte Bauraum dazu genutzt werden, das Winkelmeßsystem innerhalb des Antriebsmotors anzuordnen, so daß die axiale Baulänge des Rundschalttisches durch die Anordnung des Winkelmeßsystems nicht vergrößert werden muß.

Die Genauigkeit des Rundschalttisches bei der Positionierung eines Werkstückes ist stark von der Genauigkeit der die Spindel im Gehäuse führenden Lager abhängig. Im Stand der Technik werden hierzu spielfrei eingepaßte Nadellager verwendet und so eingebaut, daß sie sowohl die in axialer als auch die in radialer Richtung des Rundschalttisches auftretenden Kräfte aufnehmen können.

Gemäß einer letzten vorteilhaften Ausgestaltung des erfindungsgemäßen Rundschalttisches, die hier noch kurz erwähnt werden soll, erfolgt die Lagerung der Spindel im Gehäuse ganz oder teilweise durch hydrostatische Lager oder durch Magnetlager. Dabei kann die Lagerung selbstverständlich auch vollständig durch hydrostatische Lager und durch Magnetlager erfolgen. Der Vorteil der hydrostatischen Lager bzw. der Magnetlager besteht darin, daß sich diese Lager durch eine Steuerung bzw. eine Regelung zentrieren lassen, so daß die Lagerstellen im Gehäuse mit einer größeren Toleranz gefertigt werden können.

Im einzelnen gibt es nun eine Vielzahl von Möglichkeiten, den erfindungsgemäßen Rundschalttisch auszugestalten und weiterzubilden. Dazu wird verwiesen einerseits auf die dem Patentanspruch 1 nachgeordneten Patentansprüche, andererseits auf die Beschreibung zweier bevorzugter Ausführungsbeispiele in Verbindung mit der Zeichnung. In der Zeichnung zeigen

Fig. 1    eine schematische Darstellung eines ersten Ausführungsbeispieles eines erfindungsgemäßen Rundschalttisches, im Schnitt und

Fig. 2    eine schematische Darstellung eines zweiten Ausführungsbeispieles eines erfindungsgemäßen Rundschalttisches, ebenfalls im Schnitt.

Die Figuren zeigen einen Rundschalttisch 1 mit einem zylindrischen Gehäuse 2, mit einer in dem Gehäuse 2 drehbar gelagerten Spindel 3 und einem ebenfalls in dem Gehäuse 2 angeordneten Antriebsmotor 4. Der Antriebsmotor 4 besteht aus einem zwei Magnete 5 aufweisenden Rotor und einem den Rotor konzentrisch umgebenden, zwei Wicklungen 6 aufweisenden Stator. Das etwa ringförmige Gehäuse 2 ist an seiner Unterseite durch einen Gehäuseboden 7 verschlossen.

Bei vorgegebener radialer Baugröße des Gehäuses 2 wird nun erfindungsgemäß dadurch eine maximale radiale Baugröße und damit ein maximaler Durchmesser des Antriebsmotors 4 erreicht, daß die Magnete 5 ohne Rotorgehäuse direkt auf der Spindel 3 befestigt sind und die Wicklungen 6 ohne Statorgehäuse direkt in das Gehäuse 2 integriert ist. Die Magnete 5 sind dabei auf die Spindel aufgeschrumpft oder aufgeklebt, während die Wicklungen 6 mit einer Vergußmasse 8 in einer entsprechenden Ausnehmung 9 im Gehäuse 2 befestigt ist.

Um die im Betrieb des Antriebsmotors 4 auftretende Wärme in den Wicklungen 6 besser abzuführen, weist das Gehäuse 2 an seiner Außenseite mehrere Kühlrippen 10 auf. Die Wärmeabfuhr erfolgt dabei von den Wicklungen 6 über die Vergußmasse 8 an das Gehäuse 2 und von dem Gehäuse 2 über die Kühlrippen 10 an die Umgebung. Alternativ - hier jedoch nicht dargestellt - können die Kühlrippen 10 auch so ausgebildet sein, daß sie ein von außen auf das Gehäuse 2 auftreffendes Kühlmittel um die Wicklungen 6 herumleiten und so das Kühlmittel zur Wärmeabfuhr aus den Wicklungen 6 nutzen.

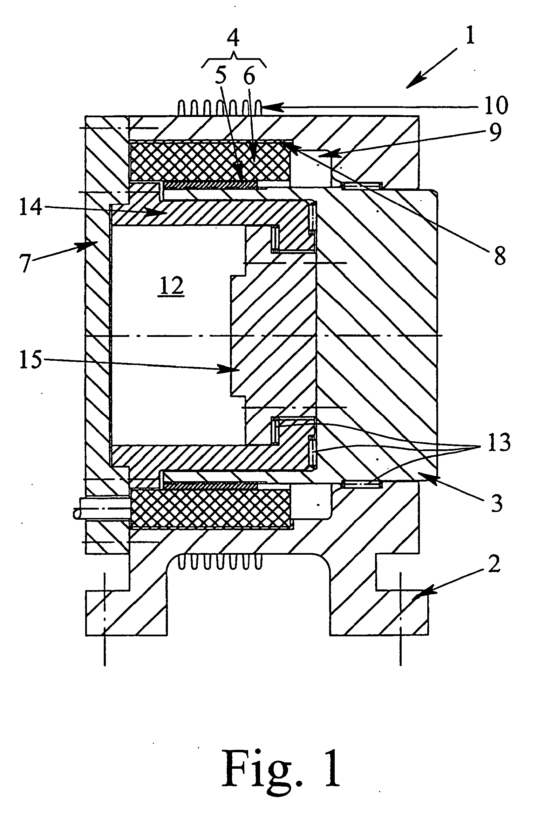

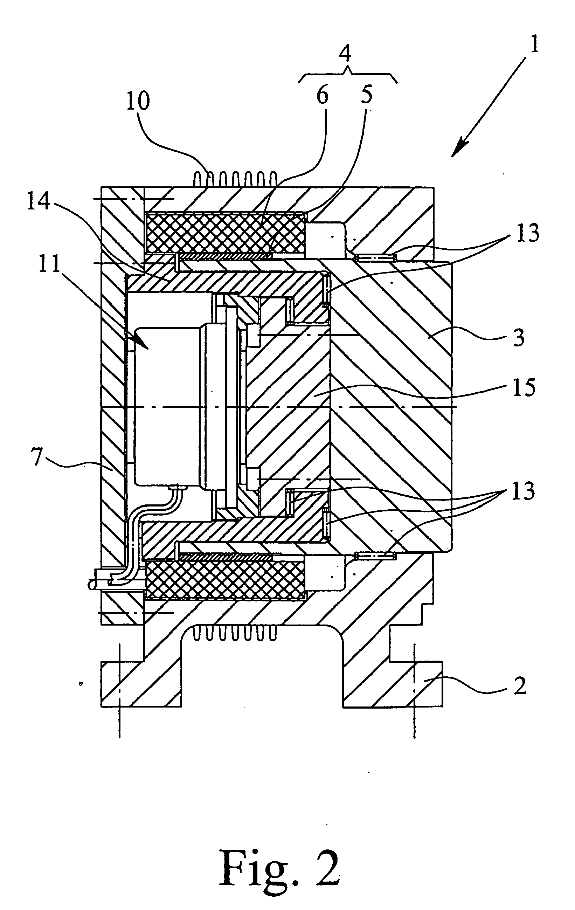

Im Unterschied zu dem Rundschalttisch 1 gemäß Fig. 1 weist der Rundschalttisch 1 gemäß Fig. 2 im Inneren des Gehäuses 2 ein direkt mit der Spindel 3 verbundenes Winkelmeßsystem 11 auf. Durch die radial sehr flache Bauweise des Antriebsmotors 4, wodurch der Antriebsmotor 4 im Verhältnis zur Spindel 3 vollständig außenliegend angeordnet ist, entsteht im Inneren des Gehäuses 2 ein Freiraum 12, der zur Unterbringung des Winkelmeßsystems 11 genutzt wird. Das Winkelmeßsystem 11 ist somit innerhalb des Antriebsmotors 4 integriert, wodurch die axiale Baulänge des Rundschalttischs 1 nicht vergrößert werden muß.

Die Lagerungen der Spindel 3 in dem Gehäuse 2 erfolgt bevorzugt durch Lager 13, die als hydrostatische Lager oder als Magnetlager ausgebildet sind. Hydrostatische Lager und Magnetlager haben den Vorteil, das sie durch eine Regelung zentriert werden können. Dadurch ergibt sich der weitere Vorteil, daß die Lagerstellen zur Aufnahme der Lager 13 eine größere Toleranz aufweisen können, als dies bei Verwendung von Nadelrollenlagern der Fall ist. Schließlich weist das Gehäuse 2 noch zwei Träger 14, 15 zur Aufnahme bzw. Abstützung der Lager 13 auf.

## Patentansprüche

1.  Rundschalttisch mit einem ortsfesten Gehäuse (2), mit einer in dem Gehäuse (2) drehbar gelagerten Spindel (3) und mit einem in dem Gehäuse (2) angeordneten Antriebsmotor (4), wobei der Antriebsmotor (4) einen Rotor mit mindestens einem Magneten (5) und einen Stator mit mindestens einer Wicklung (6) aufweist,
    **dadurch gekennzeichnet,**
    **daß** der Magnet (5) bzw. die Magnete (5) ohne Rotorgehäuse direkt auf der Spindel (3) befestigt sind und die Wicklung (6) ohne Statorgehäuse in das Gehäuse (2) des Rundschalttisches integriert ist.

2.  Rundschalttisch nach Anspruch 1, **dadurch gekennzeichnet, daß** der bzw. die Magnete (5) auf die Spindel (3) aufgeschrumpft oder aufgeklebt sind.

3.  Rundschalttisch nach Ansprüchen 1 oder 2, **dadurch gekennzeichnet, daß** die Wicklungen (6) mit einer Vergußmasse (8), beispielsweise einem Harz, oder durch formschlüssige Verbindung im Gehäuse (2) befestigt ist.

4.  Rundschalttisch nach einem der Ansprüche 1 bis 3, **dadurch gekennzeichnet, daß** das Gehäuse (2) Kühlelemente, insbesondere Kühlrippen (10) zur Wärmeabfuhr vom Stator aufweist.

5.  Rundschalttisch nach Anspruch 4, **dadurch gekennzeichnet, daß** die Kühlelemente so geformt sind, daß sie ein zugeführtes Kühlmittel um die Wicklungen (6) des Stators herumleiten und zur Wärmeabfuhr aus den Wicklungen (6) nutzen.

6.  Rundschalttisch nach Anspruch 4 oder 5, **dadurch gekennzeichnet, daß** ein geschlossenes Kühlsystem vorgesehen ist, wobei die Kühlelemente als Kühlkanäle ausgebildet sind.

7. Rundschalttisch nach einem der Ansprüche 1 bis 6, **dadurch gekennzeichnet, daß** eine Planscheibe mit der Spindel (3) verbunden ist.

8. Rundschalttisch nach einem der Ansprüche 1 bis 7, **dadurch gekennzeichnet, daß** innerhalb des Gehäuses (2), vorzugsweise innerhalb des Antriebsmotors (4), ein Winkelmeßsystems (11) angeordnet ist.

9. Rundschalttisch nach einem der Ansprüche 1 bis 8, **dadurch gekennzeichnet, daß** die Spindel (3) in dem Gehäuse (2) ganz oder teilweise durch hydrostatische Lager (13) oder/und durch Magnetlager (13) gelagert ist.

**Claims**

1. Rotary indexing table comprising a fixed housing (2), comprising a spindle (3) rotatably mounted in the housing (2), and comprising a drive motor (4) arranged in the housing (2), the drive motor (4) having a rotor with at least one magnet (5) and a stator with at least one winding (6), **characterized in that** the magnet (5) or magnets (5) is/are fastened without rotor housing directly to the spindle (3) and the winding (6) is integrated without stator housing in the housing (2) of the rotary indexing table.

2. Rotary indexing table according to Claim 1, **characterized in that** the magnet (5) or magnets (5) is/are shrunk onto the spindle (3) or adhesively bonded in place thereon.

3. Rotary indexing table according to Claim 1 or 2, **characterized in that** the windings (6) are fastened in the housing (2) using a sealing compound (8), for example a resin, or by positive-locking connection.

4. Rotary indexing table according to one of Claims 1 to 3, **characterized in that** the housing (2) has cooling elements, in particular cooling ribs (10), for dissipating heat from the stator.

5. Rotary indexing table according to Claim 4, **characterized in that** the cooling elements are formed in such a way that they direct a fed coolant around the windings (6) of the stator and use it for dissipating heat from the windings (6).

6. Rotary indexing table according to Claim 4 or 5, **characterized in that** a closed cooling system is provided, the cooling elements being designed as cooling passages.

7. Rotary indexing table according to one of Claims 1 to 6, **characterized in that** a face plate is connected to the spindle (3).

8. Rotary indexing table according to one of Claims 1 to 7, **characterized in that** an angle measuring system (11) is arranged inside the housing (2), preferably inside the drive motor (4).

9. Rotary indexing table according to one of Claims 1 to 8, **characterized in that** the spindle (3) is mounted in the housing (2) entirely or partly by hydrostatic bearings (13) and/or by magnetic bearings (13).

**Revendications**

1. Table à transfert circulaire avec un boîtier fixe (2), avec une broche (3) montée à rotation dans le boîtier (2) et avec un moteur d'entraînement (4) disposé dans le boîtier (2), le moteur d'entraînement (4) présentant un rotor avec au moins un aimant (5) et un stator avec au moins un enroulement (6), **caractérisée en ce que** l'aimant (5) ou les aimants (5) sont fixés sans boîtier de rotor directement sur la broche (3) et l'enroulement (6) est intégré sans boîtier de stator dans le boîtier (2) de la table à transfert circulaire.

2. Table à transfert circulaire selon la revendication 1, **caractérisée en ce que** le ou les aimants (5) sont emmanchés par frettage ou par collage sur la broche (3).

3. Table à transfert circulaire selon la revendication 1 ou 2, **caractérisée en ce que** les enroulements (6) sont fixés avec une masse de scellement (8), par exemple une résine, ou par connexion par engagement positif dans le boîtier (2).

4. Table à transfert circulaire selon l'une quelconque des revendications 1 à 3, **caractérisée en ce que** le boîtier (2) présente des éléments de refroidissement, notamment des nervures de refroidissement (10) pour dissiper la chaleur du stator.

5. Table à transfert circulaire selon la revendication 4, **caractérisée en ce que** les éléments de refroidissement sont formés de telle sorte qu'ils dévient un réfrigérant acheminé autour des enroulements (6) du stator et l'utilisent pour la dissipation de la chaleur hors des enroulements (6).

6. Table à transfert circulaire selon la revendication 4 ou 5, **caractérisée en ce que** l'on prévoit un système de refroidissement fermé, les éléments de refroidissement étant réalisés sous forme de canaux de refroidissement.

**7.** Table à transfert circulaire selon l'une quelconque des revendications 1 à 6, **caractérisée en ce qu'**un plateau est connecté à la broche (3).

**8.** Table à transfert circulaire selon l'une quelconque des revendications 1 à 7, **caractérisée en ce qu'**un système de mesure angulaire (11) est disposé à l'intérieur du boîtier (2), de préférence à l'intérieur du moteur d'entraînement (4).

**9.** Table à transfert circulaire selon l'une quelconque des revendications 1 à 8, **caractérisée en ce que** la broche (3) est montée dans le boîtier (2) complètement ou partiellement par le biais de paliers hydrostatiques (13) et/ou de paliers magnétiques (13).

Fig. 1

# Fig. 2

**EP 1 300 216 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19842306 A
- DE 19842306 A1
- US 5584612 A